# EUROPÄISCHE PATENTSCHRIFT

(11) **EP 3 817 112 B1**
(45) Veröffentlichungstag und Bekanntmachung des Hinweises auf die Patenterteilung: **01.05.2024**
(21) Anmeldenummer: 20204521.7
(22) Anmeldetag: 29.10.2020
(51) Int. Cl.: H01M 8/04014, H01M 8/1018, H01M 8/24

(54) **BRENNSTOFFZELLENVORRICHTUNG, FAHRZEUG MIT BRENNSTOFFZELLENVORRICHTUNG UND KONDITIONIERUNGSVORRICHTUNG MIT BRENNSTOFFZELLENVORRICHTUNG**
FUEL CELL DEVICE, VEHICLE WITH FUEL CELL DEVICE, AND CONDITIONING DEVICE WITH FUEL CELL DEVICE
PILE À COMBUSTIBLE, VÉHICULE POURVU DE DISPOSITIF DE PILE À COMBUSTIBLE ET DISPOSITIF DE CONDITIONNEMENT POURVU DE DISPOSITIF DE PILE À COMBUSTIBLE

(30) Priorität: 30.10.2019 DE 102019129336
(43) Veröffentlichungstag der Anmeldung: 05.05.2021
(73) Patentinhaber: Deutsches Zentrum für Luft- und Raumfahrt e.V., 53227 Bonn-Oberkassel (DE)
(72) Erfinder: Gentner, Christoph, 22767 Hamburg (DE)
(74) Vertreter: DTS Patent- und Rechtsanwälte Schnekenbühl und Partner mbB

(56) Entgegenhaltungen:
- KR-A- 20090 006 344
- US-A1- 2004 053 108
- US-A1- 2019 140 289

## Beschreibung

Die vorliegende Erfindung betrifft eine Brennstoffzellenvorrichtung.

Außerdem betrifft die vorliegende Erfindung ein Fahrzeug, insbesondere ein Luftfahrzeug, mit einer Brennstoffzellenvorrichtung.

Ferner betrifft die vorliegende Erfindung eine Konditionierungsvorrichtung für ein gasförmiges Medium, insbesondere Luft, mit einer Brennstoffzellenvorrichtung.

Es sind Brennstoffzellenvorrichtungen bekannt, bei denen elektrische Energie durch die Reaktion von Wasserstoff und Sauerstoff, insbesondere Luftsauerstoff, erzeugt wird. Hierzu zählen beispielsweise Polymerelektrolyt-(PEM-) Brennstoffzellen. Um in Hinblick auf eine sinnvolle Anwendung eine konstantere elektrische Spannung zu erzeugen, ist die Brennstoffzelle vorzugsweise gekühlt, um eine möglichst konstante Betriebstemperatur einzuhalten. Von Bedeutung ist für PEM-Brennstoffzellen ferner die Einhaltung einer bestimmten Feuchte der Membran für die Einhaltung des Betriebspunktes.

Für Kühlzwecke ist es bekannt, ein flüssiges Wärmeträgermedium durch die Brennstoffzellen zu pumpen und die Kühlleistung zum Beispiel anhand einer Vorlauftemperatur anzupassen. Die Flüssigkeitskühlung erfordert einen erheblichen operativen Aufwand. Es ist beispielsweise ein Wärmetauscher vorzusehen, der räumlich entfernt von der Brennstoffzellenvorrichtung positioniert ist.

Andere Kühlkonzepte setzen auf eine freie Anströmung der Brennstoffzellenvorrichtung, was jedoch zu einer häufig unzureichenden Kühlleistung führt.

Bekannt ist es auch, die Brennstoffzelle über den kathodischen Luftstrom zu kühlen, der den für die Reaktion erforderlichen Sauerstoff enthält. Zu diesem Zweck wird ein Kompressor eingesetzt, was den Wirkungsgrad der Brennstoffzellenvorrichtung verringert. Darüber hinaus führt der durch die Kühllast erhöhte und für unterschiedliche Betriebsbedingungen veränderliche Sauerstoffüberschuss zu einem veränderten Betriebspunkt und damit nicht-optimalen Bedingungen für den Betrieb der Brennstoffzellen.

Brennstoffzellenvorrichtungen finden beispielsweise Anwendung in Fahrzeugen, insbesondere Luftfahrzeugen. Die beiden erstgenannten Kühlkonzepte weisen in diesem Zusammenhang den Nachteil auf, dass Lufteinlässe für einen einstellbaren Luftvolumenstrom für den Wärmetauscher oder die Brennstoffzellenvorrichtung vorgesehen sein müssen. Dies ist nachteilig, da der Widerstand des Luftfahrzeuges gesteigert wird. Dennoch erweisen sich diese beiden erstgenannten Konzepte als vorteilhafter als das dritte Konzept, denn in diesem Fall nimmt der Wirkungsgrad der Brennstoffzellenvorrichtung ab.

Wünschenswert ist die Nutzung der Abwärme der Brennstoffzellenvorrichtung, zum Beispiel für klimatechnische Anwendungen oder für interne Prozesse. Zu Letzteren zählt beispielsweise die Verdampfung flüssig gelagerten Wasserstoffs, der für den Betrieb erforderlich ist.

Die KR 2009-0006344 A beschreibt eine Brennstoffzellenvorrichtung, bei der im Brennstoffzellenstapel eine Durchgangsöffnung gebildet ist. Eine Leitung für Kühlwasser ist durch die Durchgangsöffnung hindurchgeführt.

Weitere Brennstoffzellenvorrichtungen mit Brennstoffzellenstapeln und diese durchsetzenden Öffnungen, durch die hindurch Reaktanden oder eine Kühlflüssigkeit strömen können, sind in der US 2019/0140289 A1 und in der US 2004/0053108 A1 offenbart.

Aufgabe der vorliegenden Erfindung ist es, eine Brennstoffzellenvorrichtung mit verbesserten Kühleigenschaften bereitzustellen.

Diese Aufgabe wird durch eine erfindungsgemäße Brennstoffzellenvorrichtung mit den Merkmalen von Anspruch 1 gelöst.

Der Brennstoffzellenstapel umfasst innenseitig eine und insbesondere mindestens eine Ausnehmung. Zu diesem Zweck ist vorzugsweise vorgesehen, dass zumindest ein Teil der Brennstoffzellen ringförmig ausgestaltet ist. In der Ausnehmung ist ein Wärmeleitelement angeordnet. Auf diese Weise kann Wärme von den Brennstoffzellen an das Wärmeleitelement übertragen werden. Durch Konvektion kann das Wärmeleitelement gekühlt und Wärme abgeführt werden. Es zeigt sich, dass die Anordnung des mindestens einen Wärmeleitelementes innenliegend im Brennstoffzellenstapel zu vorteilhaften Kühleigenschaften führt.

Als vorteilhaft erweist es sich, dass das mindestens eine Wärmeleitelement über ein thermisch leitfähiges Kontaktmedium indirekt in Wärmekontakt mit dem Brennstoffzellenstapel steht, wobei das Kontaktmedium vorzugsweise schichtförmig gebildet ist. Beispielsweise ist als Kontaktmedium eine Wärmeleitpaste oder ein thermisch leitfähiges Elastomer vorgesehen, über die/das die Wärmeübertragung auf das Wärmeleitelement erfolgt.

Die Ausnehmung ist vorteilhafterweise eine Durchgangsöffnung von einer ersten Endseite des Brennstoffzellenstapels bis zu einer zweiten Endseite des Brennstoffzellenstapels. Dabei bildet der Brennstoffzellenstapel vorzugsweise einen Hohlzylinder aus, günstigerweise einen senkrechten Hohlzylinder.

Die Durchgangsöffnung weist den Vorteil auf, dass der Brennstoffzellenstapel von einer Kühlluftströmung durchströmt werden kann und Wärme besonders wirksam abgeführt werden kann.

Zur Ausbildung der Durchgangsöffnung ist beispielsweise vorgesehen, dass die Brennstoffzellen jeweils ringförmig ausgestaltet sind und mit einem äußeren Rand gemeinsam eine mantelförmige Außenumfangsfläche des Brennstoffzellenstapels bilden und mit einem inneren Rand gemeinsam eine die Ausnehmung einfassende Innenumfangsfläche des Brennstoffzellenstapels.

Günstig ist es, wenn sich das mindestens eine Wärmeleitelement entlang der gesamten oder im Wesentlichen gesamten Ausnehmung erstreckt. Dabei ist es insbesondere von Vorteil, wenn sich das Wärmeleitelement von der ersten Endseite bis zur zweiten Endseite des Brennstoffzellenstapels erstreckt.

Das mindestens eine Wärmeleitelement ist vorteilhafterweise an einer Innenumfangsfläche des Brennstoffzellenstapels angeordnet, die die Ausnehmung einfasst. Durch die Anordnung an der Innenumfangsfläche kann ein besonders guter thermischer Kontakt des mindestens einen Wärmeleitelementes mit dem Brennstoffzellenstapel sichergestellt werden.

Von Vorteil ist es, wenn das Wärmeleitelement ein konvektiv gekühltes Wärmeleitelement ist. Die konstruktive Ausgestaltung der Brennstoffzellenvorrichtung kann dadurch besonders einfach gehalten werden. Diese wird zum Beispiel von Kühlluft umströmt. Kühlluft kann in die Ausnehmung einströmen und, zum Beispiel im Fall einer Durchgangsöffnung, den Brennstoffzellenstapel durchströmen.

Bei einer bevorzugten Ausführungsform ist das mindestens eine Wärmeleitelement beispielsweise als Wärmerohr (Heatpipe) ausgestaltet. Das Wärmerohr weist einen umschlossenen Aufnahmeraum für ein Wärmeträgermedium auf, das einerseits verdampfen und andererseits kondensieren kann. Der Wärmeträger befindet sich dabei im Wesentlichen vollständig im Sattdampfbereich, so dass das Wärmerohr eine im Wesentlichen konstante Temperatur aufweist. Wärme kann über das Wärmerohr besonders effizient abgeführt werden. Ein Temperaturgradient über die Länge des Wärmerohres kann vorzugsweise vermieden werden.

Von Vorteil ist es, wenn die Brennstoffzellenvorrichtung an einer außenseitigen Mantelfläche des Brennstoffzellenstapels mindestens ein Wärmeleitelement in thermischem Kontakt mit den Brennstoffzellen aufweist. Auf diese Weise besteht die Möglichkeit, Wärme von der Mantelfläche abzuführen und die Brennstoffzellen gezielter zu kühlen. Dies begünstigt eine möglichst gleichmäßige Temperaturverteilung im Brennstoffzellenstapel.

Günstigerweise ist das außenseitig angeordnete Wärmeleitelement konvektiv gekühlt und/oder als Wärmerohr (Heatpipe) ausgestaltet. Das Wärmeleitelement erstreckt sich günstigerweise von einer ersten Endseite bis zu einer zweiten Endseite des Brennstoffzellenstapels.

Vorzugsweise ist das mindestens eine Wärmeleitelement, in der Ausnehmung und/oder an der Mantelfläche, parallel zur Stapelrichtung ausgerichtet.

Das mindestens eine Wärmeleitelement ist bei einer bevorzugten Ausführungsform der Erfindung vorzugsweise quaderförmig und/oder längserstreckt ausgebildet.

Bei Vorhandensein einer Mehrzahl von Wärmeleitelementen sind diese vorzugsweise parallel zueinander ausgerichtet.

Günstig ist es, wenn eine Mehrzahl von Wärmeleitelementen in der Ausnehmung angeordnet ist. Dies begünstigt die Wärmeabfuhr vom Brennstoffzellenstapel an dessen an die Ausnehmung grenzenden Seite.

In entsprechender Weise ist es von Vorteil, wenn eine Mehrzahl von Wärmeleitelementen an einer außenseitigen Mantelfläche des Brennstoffzellenstapels angeordnet ist, um die Wärmeabfuhr an der Mantelfläche zu begünstigen, im Hinblick auf eine möglichst homogene Temperaturverteilung in den Brennstoffzellen.

Die Wärmeleitelemente sind vorzugsweise identisch ausgestaltet, insbesondere diejenigen in der Ausnehmung und/oder diejenigen an der Mantelfläche und besonders vorteilhaft alle Wärmeleitelemente insgesamt.

Die Wärmeleitelemente sind vorteilhafterweise in Umfangrichtung des Brennstoffzellenstapels äquidistant an einer die Ausnehmung einfassenden Innenumfangsfläche und/oder an der außenseitigen Mantelfläche angeordnet. Die gleichmäßige Anordnung begünstigt die Wärmeabfuhr von den Brennstoffzellen über die Wärmeleitelemente.

Bei einer bevorzugten Ausführungsform sind an der Innenumfangsfläche des Brennstoffzellenstapels beispielsweise vier Wärmeleitelemente vorgesehen. An der außenseitigen Mantelfläche können bei einer bevorzugten Ausführungsform beispielsweise acht Wärmeleitelemente vorgesehen sein.

Vorgesehen sein kann, dass einem jeweiligen innenseitig angeordneten Wärmeleitelement in radialer Richtung ein außenseitig an der Mantelfläche gegenüberliegendes Wärmeleitelement zugeordnet ist. "Radial" ist vorliegend auf eine vom Brennstoffzellenstapel definierte Achse bezogen aufzufassen.

Von Vorteil ist es, wenn die Ausnehmung in den Brennstoffzellen in Stapelrichtung verlaufend und/oder eine Mantelfläche des Brennstoffzellenstapels mindestens eine Nut umfasst, in die das mindestens eine Wärmeleitelement teilweise und vorzugsweise mit Formschluss eingreift. An der Innenumfangsfläche können die Brennstoffzellen eine jeweilige Aussparung umfassen. Durch die Stapelung der Brennstoffzellen übereinander entsteht infolgedessen eine Nut. Alternativ oder ergänzend kann mindestens eine Nut an der außenseitigen Mantelfläche gebildet sein. Das mindestens eine Wärmeleitelement greift in die Nut ein und erstreckt sich vorteilhafterweise entlang der gesamten oder im Wesentlichen gesamten Erstreckung der Nut. Durch den Eingriff in die Nut wird die Abgabe von Wärme vom Brennstoffzellenstapel an das Wärmeleitelement begünstigt. Der aus der Nut herausragende Abschnitt des Wärmeleitelementes kann zur Wärmeabfuhr bevorzugt konvektiv gekühlt werden.

Beispielsweise ist vorgesehen, dass das mindestens eine Wärmeleitelement ungefähr zur Hälfte in die Nut eingreift.

Über den thermischen Kontakt hinaus weist das Kontaktmedium vorteilhafterweise eine Funktion zur kraftschlüssigen Verbindung des Wärmeleitelementes mit dem Brennstoffzellenstapel auf.

Als vorteilhaft erweist es sich zum Beispiel, wenn die Brennstoffzellen in Draufsicht in Stapelrichtung eine oktagonale Außenkontur aufweisen, insbesondere unter Nichtberücksichtigung etwaiger Aussparungen für die Nut(en).

Günstigerweise weist die Ausnehmung in Draufsicht in Stapelrichtung eine mit der Kontur der Brennstoffzellen übereinstimmenden Kontur auf, insbesondere unter Nichtberücksichtigung etwaiger Aussparungen für die Nut(en). Dies erweist sich als vorteilhaft für den Wärmetransport und die Kühlung des Brennstoffzellenstapels, insbesondere bei Anordnung von Wärmeleitelementen innenseitig in der Ausnehmung und außenseitig an der Mantelfläche des Brennstoffzellensta pels.

Die Kontur der Ausnehmung ist vorteilhafterweise kongruent mit der Kontur der Brennstoffzellen, insbesondere unter Nichtberücksichtigung etwaiger Aussparungen für die Nut(en).

Die Brennstoffzellen sind bei einer bevorzugten Ausführungsform PEM-Brennstoffzellen.

Wie eingangs erwähnt, betrifft die vorliegende Erfindung auch ein Fahrzeug. Aufgabe der vorliegenden Erfindung ist es, ein Fahrzeug mit einer Brennstoffzellenvorrichtung und Nutzungsmöglichkeit für deren Abwärme bereitzustellen.

Diese Aufgabe wird durch ein erfindungsgemäßes Fahrzeug gelöst, insbesondere Luftfahrzeug, umfassend mindestens eine Brennstoffzellenvorrichtung der vorstehend genannten Art und einen von einer Wandung begrenzten Innenraum, in dem die mindestens eine Brennstoffzellenvorrichtung angeordnet ist, wobei die Wandung mindestens eine Eintrittsöffnung für Kühlluft aufweist und in den Innenraum eintretende Kühlluft die mindestens eine Brennstoffzellenvorrichtung durch Konvektion kühlt.

Die Vorteile, die bereits im Zusammenhang mit der erfindungsgemäßen Brennstoffzellenvorrichtung oder vorteilhafter Ausführungsformen erläutert wurden, können bei dem Fahrzeug ebenfalls erzielt werden. Diesbezüglich kann auf die voranstehenden Ausführungen verwiesen werden.

Das Fahrzeug ist beispielsweise ein Luftfahrzeug wie ein Flugzeug, in dessen Innenraum Abwärme der Brennstoffzellenvorrichtung für interne Prozesse und/oder für Klimatisierungszwecke eingesetzt werden kann. Kühlluft kann durch eine Eintrittsöffnung, beispielsweise des Rumpfes, eintreten und den Brennstoffzellenstapel kühlen. Es sind insbesondere keine zusätzlichen Bauteile wie Wärmeüberträger erforderlich, so dass der Formwiderstand des Luftfahrzeugs nicht beeinträchtigt ist.

Bei einer andersartigen Ausführungsform ist das Luftfahrzeug zum Beispiel ein Drehflügler, dessen Abluftstrom den Kühlluftstrom für die Brennstoffzellenvorrichtung ausbildet, wobei diese unterhalb der Drehflügel positioniert ist.

Wie eingangs erwähnt, betrifft die vorliegende Erfindung auch eine Konditionierungsvorrichtung. Aufgabe der vorliegenden Erfindung ist es, eine Konditionierungsvorrichtung mit mindestens einer Brennstoffzellenvorrichtung unter Nutzung des Brennstoffzellenabgases bereitzustellen.

Hierbei wird angenommen, dass das Brennstoffzellenabgas Wasser enthält, in Folge der Reaktion von Wasserstoff und Sauerstoff.

Diese Aufgabe wird durch eine erfindungsgemäße Konditionierungsvorrichtung für ein gasförmiges Medium gelöst, insbesondere Luft, umfassend mindestens eine Brennstoffzellenvorrichtung der vorstehend genannten Art, eine Kammer, in der die mindestens eine Brennstoffzellenvorrichtung angeordnet ist, eine Eintrittsöffnung der Kammer für das gasförmige Medium, eine Austrittsöffnung der Kammer für das gasförmige Medium und eine Sammeleinrichtung mit einem Pump- oder Saugaggregat, um Wasser enthaltendes Abgas der mindestens einen Brennstoffzellenvorrichtung aus der Kammer zu entfernen und dem Abgas der mindestens einen Brennstoffzellenvorrichtung Wasser zu entziehen, und eine Zuführleitung, mit der dem Abgas entzogenes Wasser der Kammer strömungsaufwärts der mindestens einen Brennstoffzellenvorrichtung zuführbar ist.

Bei einer derartigen Konditionierungsvorrichtung kann die Kammer mit dem Medium beaufschlagt werden. Mittels des zugeführten Wassers wird das Medium befeuchtet. Durch die Feuchtigkeit wird das Betriebsverhalten der Brennstoffzellenvorrichtung verbessert, insbesondere bei PEM-Brennstoffzellen. Das Pump- oder Saugaggregat ermöglicht es, die Brennstoffzellenvorrichtung mit Über- oder Unterdruck zu beaufschlagen, um das Wasser enthaltende Abgas aus der Kammer zu entfernen. Über die Sammeleinrichtung kann das Wasser auskondensiert und der Zuführleitung zugeführt werden. Die Konditionierungsvorrichtung bietet den Vorteil, dass gleichzeitig eine Kühlung des Brennstoffzellenstapels und eine Befeuchtung zur Verbesserung des Betriebspunktes erzielt werden kann.

Die vorstehend beschriebene Konditionierungsvorrichtung ermöglicht es, das durch die Kammer geführte Medium mittels der Abwärme der Brennstoffzellenvorrichtung zu erwärmen. In diesem Fall können das zu konditionierende Medium und das Prozessmedium für die Kühlung der Brennstoffzellenvorrichtung übereinstimmen. Dies ist beispielsweise bei einem Winterbetrieb der Konditionierungsvorrichtung der Fall.

Günstig ist es, wenn die Konditionierungsvorrichtung eine Kühleinrichtung umfasst, der über eine Zuführleitung das zu konditionierende Medium zuführbar ist, wobei die Kühleinrichtung einen Teil der Sammeleinrichtung ausbildet, in dem das Wasser enthaltende Abgas der Kühleinrichtung zugeführt und darin kondensiert und der Kammer zugeführt wird.

Bei einer derartigen Ausführungsform können das zu konditionierende Medium und das Prozessmedium auseinander fallen. Das zu konditionierende Medium wird der Kühleinrichtung zugeführt, beispielsweise ein nach dem Prinzip der Wärmepumpeneinrichtung arbeitendes Klimagerät. Darin kann das zu konditionierende Medium entfeuchtet und gekühlt werden. Das Wasser enthaltende Abgas der Brennstoffzellenvorrichtung kann der Kühleinrichtung ebenfalls zugeführt werden, wodurch durch Abkühlung Wasser auskondensiert, welches der Kammer zur Befeuchtung zugeführt werden kann.

Vorstehend beschriebene Ausführungsform der Klimatisierungsvorrichtung beschreibt insbesondere deren Sommerbetrieb.

Günstigerweise umfasst die Konditionierungsvorrichtung eine mittels Energie der mindestens einen Brennstoffzellenvorrichtung elektrisch betriebene Heizeinrichtung, der das zu konditionierende gasförmige Medium zuführbar ist. Strömungsabwärts der Kammer bzw. der Kühleinrichtung kann das Medium für Winterbetrieb und gegebenenfalls Sommerbetrieb aufgeheizt werden. Günstig ist die Nutzung der elektrischen Energie der mindestens einen Brennstoffzellenvorrichtung.

Es versteht sich, dass die elektrische Energie der mindestens einen Brennstoffzellenvorrichtung zum Betreiben weiterer Aggregate der Konditionierungsvorrichtung eingesetzt werden kann. Hierzu zählen insbesondere Antriebsmotoren für Fördereinrichtungen wie Gebläse zum Bereitstellen von Luftströmen, Fördereinrichtungen wie Saug- oder Pumpaggregate, zum Beispiel zur Erzeugung des Abgasstroms und/oder Aggregate zu internen Versorgung der Brennstoffzellenvorrichtung.

Weitere vorteilhafte Ausführungsformen der Konditionierungsvorrichtung ergeben sich durch vorteilhafte Ausführungsformen der erfindungsgemäßen Brennstoffzellenvorrichtung.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine schematische perspektivische Ansicht einer erfindungsgemäßen Brennstoffzellenvorrichtung in vereinfachter Darstellung;
- Figur 2:: eine Draufsicht auf die Brennstoffzellenvorrichtung in Figur 1;
- Figur 3:: eine vergrößerte Darstellung von Detail A in Figur 2;
- Figur 4:: eine vergrößerte Darstellung von Detail B in Figur 2;
- Figur 5:: eine schematische Darstellung eines erfindungsgemäßen Fahrzeugs, ausgestaltet als Luftfahrzeug und insbesondere als Flugzeug;
- Figur 6:: eine schematische Darstellung eines erfindungsgemäßen Fahrzeugs, ausgestaltet als Luftfahrzeug und insbesondere als Drehflügler;
- Figur 7:: eine bevorzugte Ausführungsform einer erfindungsgemäßen Konditionierungsvorrichtung in einem Winterbetrieb;
- Figur 8:: die Konditionierungsvorrichtung aus Figur 7 in einem Sommerbetrieb;
- Figur 9:: schematisch ein Temperatur-Feuchtigkeit-Diagramm für den Winterbetrieb gemäß Figur 7; und
- Figur 10:: schematisch ein Temperatur-Feuchtigkeit-Diagramm für den Sommerbetrieb gemäß Figur 8.

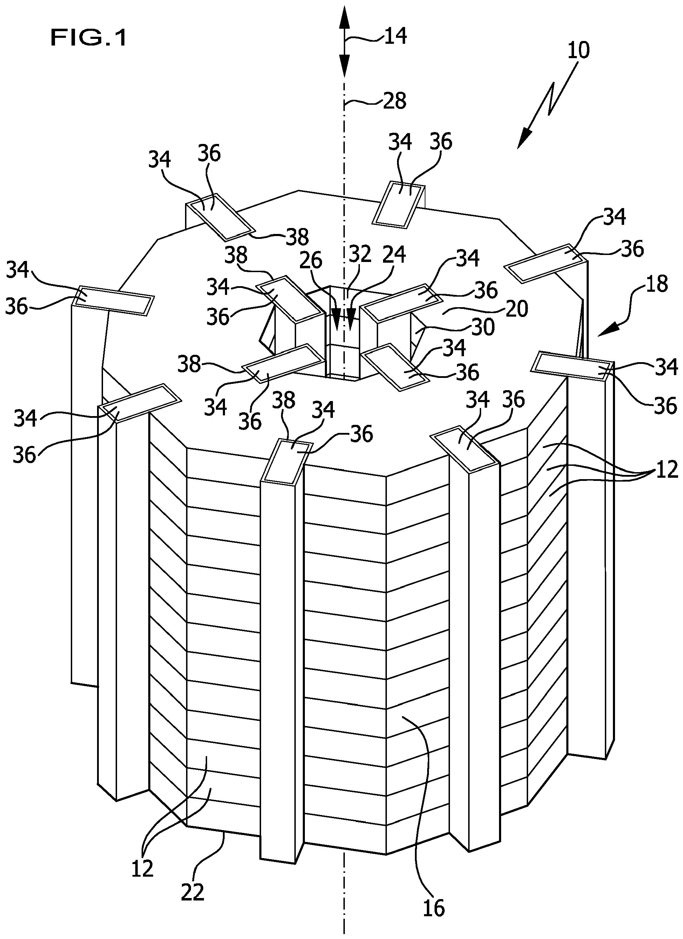

Figur 1 zeigt in schematischer vereinfachter Darstellung eine insgesamt mit dem Bezugszeichen 10 belegte vorteilhafte Ausführungsform einer erfindungsgemäßen Brennstoffzellenvorrichtung. Die Brennstoffzellenvorrichtung 10 wird nachfolgend vereinfacht als Vorrichtung 10 bezeichnet.

Die Vorrichtung 10 umfasst eine Mehrzahl von stapelweise übereinander angeordneten Brennstoffzellen 12, die vorzugsweise identisch ausgestaltet sind. Im vorliegenden Fall sind die Brennstoffzellen PEM-Brennstoffzellen (Polymerelektrolyt-Brennstoffzelle), bei denen Wasserstoff mit Sauerstoff unter Entstehung von Wasser, Abwärme und elektrischer Energie reagiert.

Nicht dargestellt in der Zeichnung sind etwaige Zuführungen für Wasserstoff und Sauerstoff und/oder elektrische Leitungen zum Ableiten der elektrischen Energie, die bei der Reaktion auftritt. Vorgesehen ist jedoch günstigerweise, dass der Sauerstoff dem Umgebungsmedium, vorliegend Luft, entnommen werden kann und keine gesonderte Zuführung erforderlich ist.

Die Brennstoffzellen 12 sind entlang einer Stapelrichtung 14 übereinander gestapelt und dabei so angeordnet, dass die jeweiligen äußeren Ränder der Brennstoffzellen 12 miteinander fluchten und außenseitig eine einheitliche Mantelfläche 16 gebildet ist.

Der durch die Brennstoffzellen 12 gebildete Brennstoffzellenstapel 18 weist eine erste Endseite 20 auf und eine zweite Endseite 22. Die Endseiten 20, 22 sind einander abgewandte Endseiten des Brennstoffzellenstapels 18.

Der Brennstoffzellenstapel 18 weist gemäß der vorliegenden Erfindung eine zumindest einen Teil, vorzugsweise alle, der Brennstoffzellen 12 in Stapelrichtung 14 durchsetzende Ausnehmung 24 auf. Die Ausnehmung 24 ist gebildet als Durchgangsöffnung 26, die sich vorliegend vorteilhaft von der ersten Endseite 20 bis zur zweiten Endseite 22 erstreckt.

Die Durchgangsöffnung 26 ist zentral im Brennstoffzellenstapel 18 gebildet und verläuft entlang der Stapelrichtung 14, die eine Achse 28 des Brennstoffzellenstapels 18 definiert.

Zur Bildung der Ausnehmung 24 und insbesondere Durchgangsöffnung 26 ist eine jeweilige Brennstoffzelle 12 ringförmig ausgestaltet und weist zentral eine Durchgangsöffnung 30 auf. Die Durchgangsöffnungen 30 fluchten miteinander und bilden dadurch die Durchgangsöffnung 26.

Eine Innenumfangsfläche 32 des Brennstoffzellenstapels 18 fasst die Durchgangsöffnung 26 ein.

Die Vorrichtung 10 kann zum Kühlen und Einstellen eines optimalen Betriebspunktes konvektiv gekühlt werden. Dabei kommt insbesondere Kühlluft zum Einsatz, die den Brennstoffzellenstapel 18 umströmt. Insbesondere besteht auch die Möglichkeit, dass die Kühlluft durch die Durchgangsöffnung 26 strömen kann.

Zur Steigerung der Kühlleistung weist die Vorrichtung 10 mindestens ein Wärmeleitelement 34 auf, das in thermischem Kontakt mit den Brennstoffzellen 12 in der Ausnehmung 24 und insbesondere Durchgangsöffnung 26 angeordnet ist.

Im vorliegenden Fall sind an der Innenumfangsfläche 32 mehrere Wärmeleitelemente 34 vorgesehen. Zur Steigerung der Kühlleistung sind auch an der Mantelfläche 16 mehrere Wärmeleitelemente 34 vorgesehen. Günstig ist es dabei, dass einerseits die Wärmeleitelemente 34 in der Durchgangsöffnung 26 für sich und andererseits an der Mantelfläche 16 für sich identisch ausgestaltet sind. Bei der Vorrichtung 10 sind sogar alle Wärmeleitelemente 34 identisch ausgestaltet.

Im vorliegenden Fall sind die Wärmeleitelemente 34 als Wärmerohre 36 (Heatpipes) ausgestaltet. In den Wärmerohren 36 ist ein Wärmeträgermedium aufgenommen, das unter Aufnahme von Wärme verdampft und an anderer Stelle wieder kondensiert. Es stellt sich im Wärmerohr 36 ein durchgängiges Sattdampfgebiet ein, wodurch eine im Wesentlichen konstante Temperatur des Wärmerohrs 36 begünstigt wird. Die Wärmerohre 36 werden konvektiv durch die strömende Luft gekühlt, wodurch Wärme vom Brennstoffenzellenstapel 18 wirkungsvoll entfernt und innerhalb einer jeweiligen Brennstoffzelle 12 eine weitgehend homogene Temperaturverteilung erzielt werden kann. Aufgrund der jeweils einheitlichen Temperatur der Wärmerohre 36 besteht der Vorteil, dass kein Temperaturgradient innerhalb des Brennstoffzellenstapels 18 in der Stapelrichtung 14 auftritt.

Zum Aufnehmen der Wärmerohre 36 weist die Ausnehmung 24 jeweilige Nuten 38 auf. Die Nuten 38 sind durch Aussparungen 40 an einer jeweiligen Brennstoffzelle 12 gebildet. Durch die Stapelung der Brennstoffzellen 12 entsteht entlang der Stapelrichtung 14 die jeweilige Nut.

Das leistenförmig und insbesondere quaderförmig ausgestaltete Wärmerohr 36 ist so bemessen, dass es formschlüssig in die Nut 38 eingreifen kann. Dabei erstreckt sich das Wärmerohr 36 von der ersten Endseite 20 bis zur zweiten Endseite 22. Das Wärmerohr 36 greift mit einem Eingriffsabschnitt in die Nut 38 ein. Der jeweils andere Abschnitt des Wärmerohrs 36 ragt aus der Nut 38 heraus. Im vorliegenden Fall greift das Wärmerohr 36 ungefähr zur Hälfte in die Nut 38 ein. Dies sichert zum einen eine wirksame Wärmeübertragung auf das Wärmerohr 36 und zum anderen eine wirksame Wärmeabfuhr infolge der Luftkühlung.

An der Mantelfläche 16 sind ebenfalls Nuten 38 zur Aufnahme eines jeweiligen Wärmerohrs 36 gebildet, die in Größe und Aufbau den Nuten 38 an der Innenumfangsfläche 32 entsprechen.

An der Innenumfangsfläche 32 sind die vorliegend vier Wärmerohre 36 äquidistant zueinander positioniert. Im vorliegenden Fall beträgt ein Winkelabstand zwischen benachbarten Wärmerohren 36 im Wesentlichen 90° bezüglich der Achse 28.

An der Mantelfläche 16 sind die vorliegend acht Wärmerohre 36 äquidistant zueinander positioniert. Ein Winkelabstand zwischen benachbarten Wärmerohren 36 bezüglich der Achse 28 beträgt im Wesentlichen 45°.

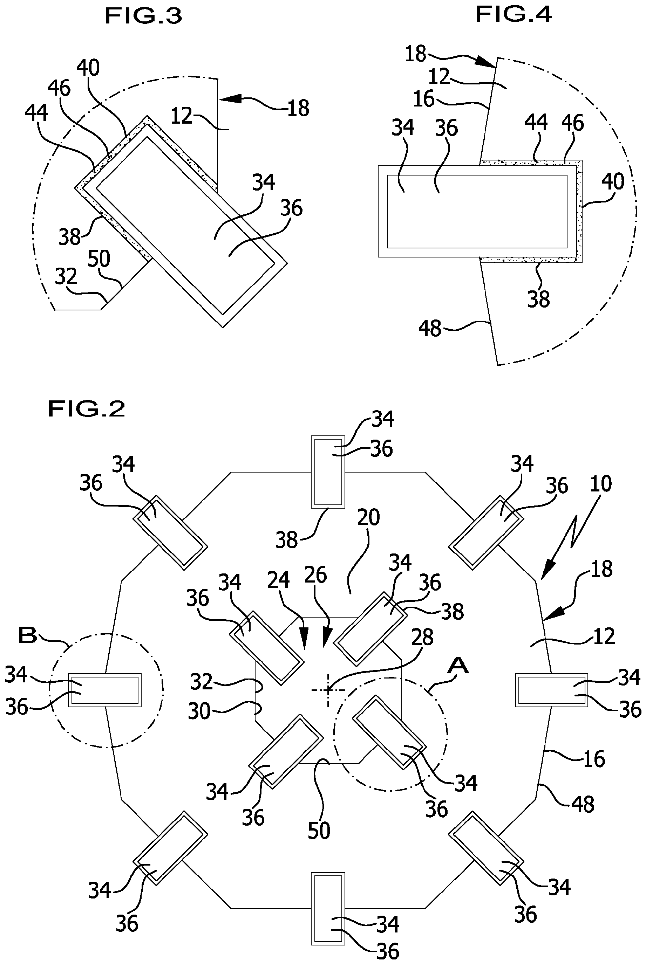

Die Wärmerohre 36 an der Innenumfangsfläche 32 und an der Mantelfläche 16 weisen parallel zur Achse 28 ihre größte Erstreckung auf. Ihre Abmessung radial bezüglich der Achse 28 ist größer als ihre Abmessung bezüglich der Umfangsrichtung um die Achse 28. Auf diese Weise ragen die Wärmerohre 36, bezogen auf eine axiale Blickrichtung in Draufsicht auf den Brennstoffzellenstapel 18 (Figur 2) im Wesentlichen radial nach innen an der Innenumfangsfläche 32 bzw. radial nach außen an der Mantelfläche 16.

Zur Verbesserung des thermischen Kontaktes zwischen den Brennstoffzellen 12 und den Wärmerohren 36 ist ein im vorliegenden Fall schichtförmiges Kontaktmedium 44 vorgesehen. Das Kontaktmedium 44 ist beispielsweise durch eine Wärmeleitpaste 46 gebildet, die die Seitenwände und den Boden der Nut 38 bedeckt und in Kontakt mit dem in die Nut 38 eintauchenden Abschnitt des Wärmerohrs 36 steht. Das Kontaktmedium 44 übt über den thermischen Kontakt hinaus auch eine kraftschlüssige Funktion aus, indem Adhäsionskräfte zu den Brennstoffzellen 12 und/oder zum Wärmerohr 36 wirken.

Als Kontaktmedium kann alternativ beispielsweise ein thermisch leitfähiges Elastomer zum Einsatz kommen.

Wie insbesondere Figur 2 hervorgeht, weist eine jeweilige Brennstoffzelle 12 in Draufsicht axial vorliegend eine im Wesentlichen achteckförmige Außenkontur 48 auf, unter Nichtbeachtung der Nuten 38.

Entsprechendes gilt für die Innenkontur 50 der Brennstoffzellen 12 unter Nichtbeachtung der Nuten 38. Auch die Innenkontur 50 ist achteckförmig. Beiden Konturen 48, 50 weisen vorzugsweise die Kontur eine regelmäßigen Achtecks auf und sind, abgesehen von der Größe, zueinander kongruent.

Es versteht sich, dass die Konturen 48, 50 bei andersartigen vorteilhaften Ausführungsformen der erfindungsgemäßen Vorrichtung 10 abweichend von der hier beschriebenen Form sein können. Beispielsweise sind quadratische, rechteckförmige, runde, insbesondere kreisrunde, polygonale oder Freiform-Konturen denkbar.

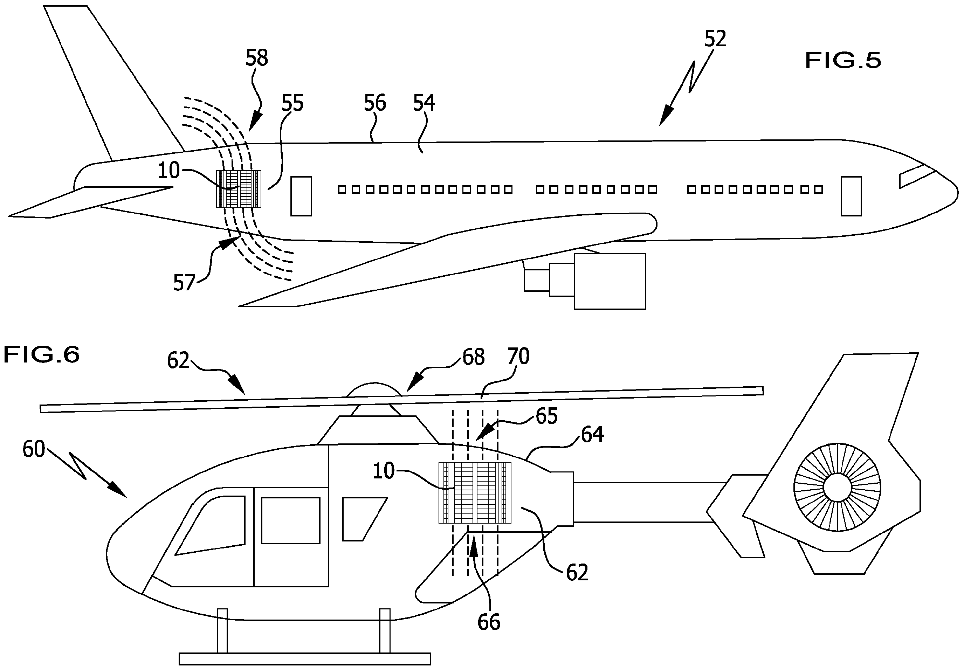

Die Figuren 5 und 6 zeigen mit den Bezugszeichen 52 bzw. 60 belegte vorteilhafte Ausführungsformen eines erfindungsgemäßen Luftfahrzeugs. Die Luftfahrzeuge 52, 60 weisen jeweils mindestens eine Vorrichtung 10 der vorstehend beschriebenen Art auf.

Das Luftfahrzeug 52 ist ausgestaltet als (Strahl-)Flugzeug 54. In einem Innenraum 55, der von einer Wandung 56 des Rumpfes begrenzt ist, ist die mindestens eine Vorrichtung 10 angeordnet.

In der Wandung 56 sind Eintrittsöffnungen 57 und Austrittsöffnungen 58 angeordnet. Kühlluft kann durch die Eintrittsöffnungen 57 in den Innenraum 55 strömen, die Vorrichtung 10 entlang und durch die Durchgangsöffnung 26 durchströmen und anschließend durch die Austrittsöffnungen 58 wieder aus dem Innenraum 55 austreten.

Auf diese Weise kann während des Fluges Umgebungsluft zum Kühlen der Brennstoffzellen 12 eingesetzt werden. Günstig ist es dabei, wenn die Öffnungen 57, 58 so positioniert und gebildet sind, dass die aerodynamischen Eigenschaften des Flugzeugs 54 nicht beeinträchtigt werden. Im vorliegenden Fall ist dies an der Unterseite bzw. der Oberseite des Rumpfes dargestellt.

Das Luftfahrzeug 60 gemäß Figur 6 ist ein Drehflügler 62 in Gestalt eines Hubschraubers. Dabei ist ebenfalls ein Innenraum 63 vorgesehen, der von einer Wandung 64, nämlich dem Motorgehäuse des Hubschraubers, begrenzt ist. In der Wandung 64 sind Eintrittsöffnungen 65 und Austrittsöffnungen 66 gebildet.

Im vorliegenden Fall ist die mindestens eine Vorrichtung 10 unterhalb eines Auftrieb erzeugenden Rotors 68 mit Flügeln 70 positioniert. Die Abwindströmung des Rotors 68 wird zum Kühlen der Brennstoffzellen 12 eingesetzt und kann durch die Eintrittsöffnung 65 in den Innenraum 63 eintreten und anschließend aus den Austrittsöffnungen 66 wieder aus dem Innenraum 63 austreten.

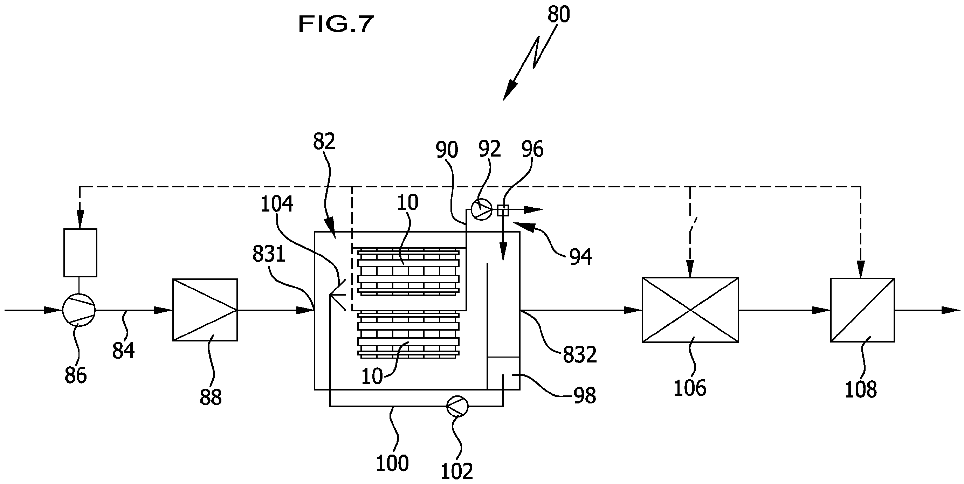

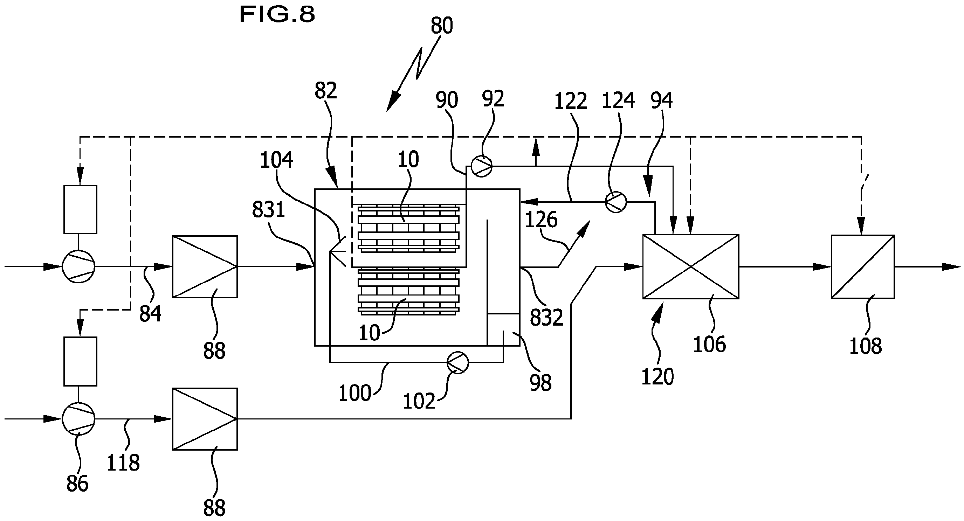

Nachfolgend wird unter Verweis auf die Figuren 7 bis 10 auf eine mit dem Bezugszeichen 80 belegte vorteilhafte Ausführungsform einer erfindungsgemä-ßen Konditionierungsvorrichtung für ein gasförmiges Medium, insbesondere Luft, eingegangen. Die Konditionierungsvorrichtung 80 dient zur Konditionierung und insbesondere Klimatisierung von Luft. Dabei kommt mindestens eine Vorrichtung 10 der vorstehend beschriebenen Art zum Einsatz. Figur 7 zeigt, unter Ausblendung einiger Komponenten, die Konditionierungsvorrichtung in einem Winterbetriebsmodus, Figur 8 in einem Sommerbetriebsmodus.

Die Konditionierungsvorrichtung 80 umfasst eine Kammer 82. In der Kammer 82 ist mindestens eine Vorrichtung 10 angeordnet. Vorliegend sind es derer zwei.

Eine Zuführleitung 84 ist vorgesehen, durch die hindurch mittels einer Fördereinrichtung 86, beispielsweise eines Gebläses, das Medium förderbar ist. Ein Filterelement 88 kann der Kammer 82 vorgelagert in die Zuführleitung 84 geschaltet sein.

Das Medium wird der Kammer 82 zugeführt. Sauerstoff, der in der Luft enthalten ist, dient zur Reaktion mit Wasserstoff, der über eine in der Zeichnung nicht dargestellte Leitung zugeführt wird.

Die Kammer 82 weist eine Eintrittsöffnung 831 für das Medium und eine Austrittsöffnung 832 für das Medium auf.

Die Brennstoffzellen 12 sind vorliegend PEM-Brennstoffzellen, bei denen zum einen ein bestimmter Feuchtegehalt und zum anderen eine bestimmte Betriebstemperatur eingestellt werden sollten, damit ein bevorzugter Betriebspunkt erreicht wird.

Brennstoffzellenabgas wird über eine Ausgangsleitung 90 aus der Kammer 82 abgeführt. Zu diesem Zweck ist vorliegend ein Saugaggregat 92 vorgesehen, um über die Länge der Brennstoffzellenstapel 18 einen Unterdruck zu erzeugen. Das Abgas weist einen hohen Wassergehalt auf (nahe 100% relativer Feuchte).

Eine Sammeleinrichtung 94 ist vorgesehen, um dem Brennstoffzellenabgas Wasser zu entziehen. Dabei kommt bei dem Winterbetriebsmodus gemäß Figur 7 ein Tropfenabscheider 96 zum Einsatz (nur in Figur 7 dargestellt). Die Sammeleinrichtung 94 weist ein Reservoir 98 auf, dem abgeschiedene Tropfen zugeführt werden können.

Ausgehend vom Reservoir 98 wird das Wasser über eine Zuführleitung 100 der Sammeleinrichtung 94, in die ein Pumpaggregat 102 geschaltet sein kann, einer Sprüheinrichtung 104 zugeordnet. Die Sprüheinrichtung 104 ist im Strom des zuströmenden Mediums strömungsaufwärts der Vorrichtung 10 angeordnet, so dass das Medium befeuchtet wird.

Das nach Durchgang durch die Brennstoffzellenstapel 18 erwärmte Medium gelangt durch eine im Winterbetrieb optional einsetzbare Kühleinrichtung 106 zu einer Heizeinrichtung 108. In der Heizeinrichtung 108 kann das Medium auf die gewünschte Betriebstemperatur erwärmt werden.

Vorteilhaft ist es, dass der Antrieb für die Fördereinrichtung 86, das Saugaggregat 92, das Pumpaggregat 102, die Kühleinrichtung 106, die Heizeinrichtung 108 und interne Aggregate der Vorrichtungen 10 elektrisch mittels der Energie der Vorrichtungen 10 betrieben werden können.

Günstig ist es, dass bei der Konditionierungsvorrichtung 80 in der Kammer 82 zugleich eine Erwärmung des zu konditionierenden Mediums und eine Befeuchtung der Membranen der Brennstoffzellen 12 durchgeführt werden kann.

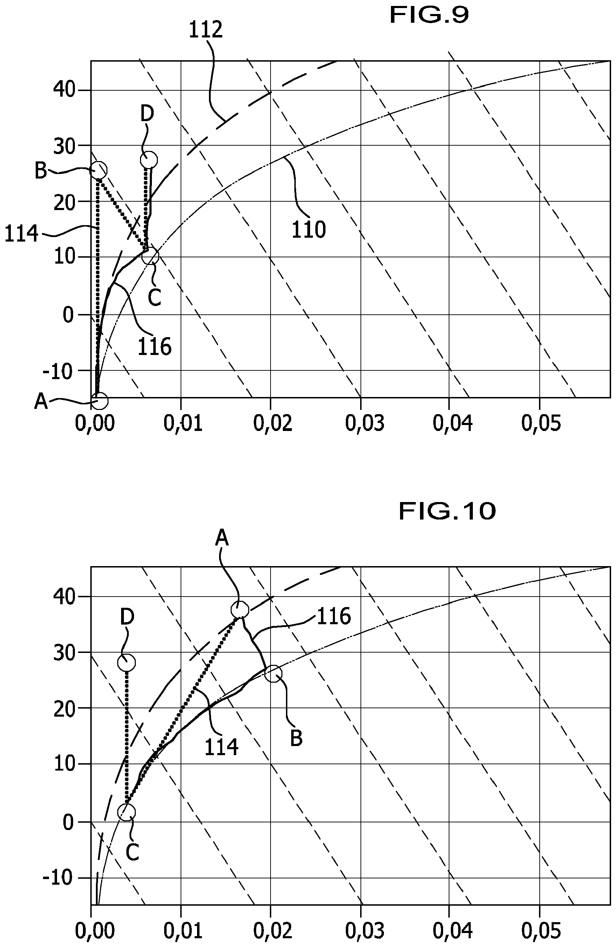

Figur 9 zeigt beispielhaft den Vorgang im Winterbetriebsmodus, wobei die Temperatur (in °C) über der Feuchtigkeit des Mediums (in kg Wasser/kg Luft) aufgetragen ist. Die mit Bezugszeichen 110 versehene Kurve beschreibt die Gleichgewichtskurve für 100% relativer Feuchte, die mit Bezugszeichen 112 belegte Kurve den Gleichgewichtszustand für 50% relativer Feuchte.

Ausgehend von einem Ausgangspunkt A ist bei einer herkömmlichen Klimaanlage zunächst bis zum Punkt B eine Vorwärmung durchzuführen, anschließend eine Befeuchtung zum Punkt C und schließlich eine Nachwärmung zum Punkt D (gepunktete Kurve 114).

Bei der Konditionierungsvorrichtung 80 kann demgegenüber der Schritt der Vorwärmung A-B und der Befeuchtung B-C in der Kammer 82 gleichzeitig durchgeführt werden, was durch die durchgezogene Kurve 116 dargestellt ist. Über die Vereinfachung in konstruktiver Hinsicht weist die Konditionierungsvorrichtung 80 gegenüber einer herkömmlichen Klimaanlage somit auch den Vorteil auf, dass der gewünschte Betriebspunkt D schneller erreicht wird.

Nachfolgend wird auf den in Figur 8 dargestellten Sommerbetriebsmodus der Konditionierungsvorrichtung 80 eingegangen. Es versteht sich, dass in den Figuren 8 bzw. 7 ausgeblendete Komponenten für den jeweils anderen Betrieb vorhanden sein können.

Im Sommerbetriebsmodus wird das zu konditionierende und insbesondere zu kühlende Medium, nämlich Luft, über eine gesonderte Zuführleitung 118 zugeführt. In die Zuführleitung 118 können ebenfalls eine Fördereinrichtung 86 und ein Filterelement 88 geschaltet sein. Das Medium gelangt über die Zuführleitung 118 zur Kühleinrichtung 106. Die Kühleinrichtung 106 ist vorzugsweise ein nach dem Wärmepumpenprinzip arbeitendes Klimagerät 120.

Im Sommerbetrieb gelangt das Brennstoffzellenabgas, das über die Ausgangsleitung 90 der Kammer 82 entzogen wird, zur Kühleinrichtung 106. Die Kühleinrichtung 106 bildet einen Teil der Sammeleinrichtung 94.

In der Kühleinrichtung 106, beispielsweise an einem Luftkühler, kondensiert das im Abgas enthaltene Wasser. Über eine Leitung 122, in die ein Pumpaggregat 124 geschaltet sein kann, wird das Wasser dem Reservoir 98 zugeführt. Ausgehend von dort kann es wie vorstehend beschrieben zum Befeuchten des in die Kammer 82 eintretenden Mediums eingesetzt werden.

Abweichend vom Winterbetrieb ist das in die Kammer 82 eintretende Medium ein Prozessmedium, das nach Durch- und Umströmen der Vorrichtungen 10 erwärmt ist und über eine Abgabeleitung 126 zum Beispiel in die Atmosphäre abgelassen wird. Demgegenüber wird das zu konditionierende Medium über die Zuführleitung 118 zugeführt.

In der Kühleinrichtung 106 wird diese Luft in an sich bekannter Weise entfeuchtet und gekühlt. Erforderlichenfalls kann ein Nachwärmen in der Heizeinrichtung 108 erfolgen.

Figur 10 zeigt die Temperatur als Funktion der Feuchte für den Sommerbetriebsmodus gemäß Figur 8. Die warme und mäßig feuchte Luft gemäß Ausgangspunkt A wird in der Kühleinrichtung 106 entlang der Kurve 116 gekühlt und entfeuchtet (B-C). Die gekühlte Außenluft ist nahezu mit 100% relativer Feuchte gesättigt (B). Durch die Mischung mit Raumluft oder Einsatz der Heizeinrichtung 108 kann die Temperatur auf den Punkt C angepasst werden, wodurch die relative Feuchte wieder abfällt.

### Bezugszeichenliste

- 10: Brennstoffzellenvorrichtung
- 12: Brennstoffzelle
- 14: Stapelrichtung
- 16: Mantelfläche
- 18: Brennstoffzellenstapel
- 20: erste Endseite
- 22: zweite Endseite
- 24: Ausnehmung
- 26: Durchgangsöffnung
- 28: Achse
- 30: Durchgangsöffnung
- 32: Innenumfangsfläche
- 34: Wärmeleitelement
- 36: Wärmerohr
- 38: Nut
- 40: Aussparung
- 44: Kontaktmedium
- 46: Wärmeleitpaste
- 48: Außenkontur
- 50: Innenkontur
- 52: Luftfahrzeug
- 54: Flugzeug
- 55: Innenraum
- 56: Wandung
- 57: Eintrittsöffnung
- 58: Austrittsöffnung
- 60: Luftfahrzeug
- 62: Drehflügler
- 63: Innenraum
- 64: Wandung
- 65: Eintrittsöffnung
- 66: Austrittsöffnung
- 68: Rotor
- 70: Flügel
- 80: Konditionierungsvorrichtung
- 82: Kammer
- 831: Eintrittsöffnung
- 832: Austrittsöffnung
- 84: Zuführleitung
- 86: Fördereinrichtung
- 88: Filterelement
- 90: Ausgangsleitung
- 92: Saugaggregat
- 94: Sammeleinrichtung
- 96: Tropfenabscheider
- 98: Reservoir
- 100: Zuführleitung
- 102: Pumpaggregat
- 104: Sprüheinrichtung
- 106: Kühleinrichtung
- 108: Heizeinrichtung
- 110, 112, 114, 116: Kurve
- 118: Zuführleitung
- 120: Klimagerät
- 122: Leitung
- 124: Pumpaggregat
- 126: Abgabeleitung

## Patentansprüche

1. Brennstoffzellenvorrichtung, umfassend eine Mehrzahl von in einer Stapelrichtung (14) übereinander angeordneten, einen Brennstoffzellenstapel (18) bildenden Brennstoffzellen (12), insbesondere PEM-Brennstoffzellen, wobei im Brennstoffzellenstapel (18) eine die Brennstoffzellen (12) in Stapelrichtung (14) durchsetzende Ausnehmung (24) gebildet ist und in der Ausnehmung (24) mindestens ein Wärmeleitelement (34) angeordnet ist, **dadurch gekennzeichnet, dass** das mindestens eine Wärmeleitelement (34) in thermischem Kontakt mit den Brennstoffzellen (12) ist, wobei das mindestens eine Wärmeleitelement (34) über ein thermisch leitfähiges Kontaktmedium (44) indirekt in Wärmekontakt mit dem Brennstoffzellenstapel (18) steht, wobei das Kontaktmedium (44) vorzugsweise schichtförmig gebildet ist.

2. Brennstoffzellenvorrichtung nach Anspruch 1, **dadurch gekennzeichnet, dass** die Ausnehmung (24) eine Durchgangsöffnung (26) von einer ersten Endseite (20) des Brennstoffzellenstapels (18) bis zu einer zweiten Endseite (22) des Brennstoffzellenstapels (18) ist, insbesondere dass der Brennstoffzellenstapel (18) einen Hohlzylinder ausbildet.

3. Brennstoffzellenvorrichtung nach Anspruch 1 oder 2, **dadurch gekennzeichnet, dass** sich das mindestens eine Wärmeleitelement (34) entlang der gesamten oder im Wesentlichen gesamten Ausnehmung (24) erstreckt, insbesondere von der ersten Endseite (20) bis zur zweiten Endseite (22) des Brennstoffzellenstapels (18).

4. Brennstoffzellenvorrichtung nach einem der voranstehenden Ansprüche, **dadurch gekennzeichnet, dass** das mindestens eine Wärmeleitelement (34) an einer Innenumfangsfläche (32) des Brennstoffzellenstapels (18) angeordnet ist, der die Ausnehmung (24) einfasst.

5. Brennstoffzellenvorrichtung nach einem der voranstehenden Ansprüche, **dadurch gekennzeichnet, dass** zumindest eines der Folgenden gilt:
- das Wärmeleitelement (34) ist ein konvektiv gekühltes Wärmeleitelement (34);
- das Wärmeleitelement (34) ist als Wärmerohr (36) (Heatpipe) ausgestaltet.

6. Brennstoffzellenvorrichtung nach einem der voranstehenden Ansprüche, **dadurch gekennzeichnet, dass** die Ausnehmung (24) eine Erstreckung quer und insbesondere senkrecht zu von den Brennstoffzellen (12) jeweils definierten Ebenen aufweist.

7. Brennstoffzellenvorrichtung nach einem der voranstehenden Ansprüche, **dadurch gekennzeichnet, dass** die Brennstoffzellenvorrichtung (10) an einer außenseitigen Mantelfläche (16) des Brennstoffzellenstapels (18) mindestens ein Wärmeleitelement (34) in thermischem Kontakt mit den Brennstoffzellen (12) aufweist.

8. Brennstoffzellenvorrichtung nach einem der voranstehenden Ansprüche, **dadurch gekennzeichnet, dass** das mindestens eine Wärmeleitelement (34) parallel zur Stapelrichtung (14) ausgerichtet ist und/oder dass die Brennstoffzellen (12) in Draufsicht in Stapelrichtung (14) eine oktagonale Außenkontur (48) aufweisen.

9. Brennstoffzellenvorrichtung nach einem der voranstehenden Ansprüche, **dadurch gekennzeichnet, dass** eine Mehrzahl von Wärmeleitelementen (34) in der Ausnehmung (24) und/oder eine Mehrzahl von Wärmeleitelementen (34) an einer außenseitigen Mantelfläche (16) des Brennstoffzellenstapels (18) angeordnet ist, insbesondere dass die Wärmeleitelemente (34) identisch ausgestaltet sind, vorzugsweise dass die Wärmeleitelemente (34) in Umfangsrichtung des Brennstoffzellenstapels (18) äquidistant an einer die Ausnehmung (24) einfassenden Innenumfangsfläche (32) und/oder an der außenseitigen Mantelfläche (16) angeordnet sind.

10. Brennstoffzellenvorrichtung nach einem der voranstehenden Ansprüche, **dadurch gekennzeichnet, dass** die Ausnehmung (24) und/oder eine Mantelfläche (16) des Brennstoffzellenstapels (18) in den Brennstoffzellen (12) in Stapelrichtung (14) verlaufend mindestens eine Nut (38) umfasst, in die das mindestens eine Wärmeleitelement (34) teilweise und vorzugsweise mit Formschluss eingreift, wobei das mindestens eine Wärmeleitelement (34) vorzugsweise ungefähr zur Hälfte in die Nut (38) eingreift.

11. Brennstoffzellenvorrichtung nach einem der voranstehenden Ansprüche, **dadurch gekennzeichnet, dass** die Ausnehmung (24) in Draufsicht in Stapelrichtung (14) eine mit der Kontur (48) der Brennstoffzellen (12) übereinstimmende Kontur (50) aufweist und insbesondere kongruent zu dieser ist.

12. Fahrzeug, insbesondere Luftfahrzeug (52; 60), umfassend mindestens eine Brennstoffzellenvorrichtung (10) nach einem der voranstehenden Ansprüche und einen von einer Wandung (56; 64) begrenzten Innenraum (55; 63), in dem die mindestens eine Brennstoffzellenvorrichtung (10) angeordnet ist, wobei die Wandung (56; 64) mindestens eine Eintrittsöffnung (57; 65) für Kühlluft aufweist und in den Innenraum (55; 63) eintretende Kühlluft die mindestens eine Brennstoffzellenvorrichtung (10) durch Konvektion kühlt.

13. Konditionierungsvorrichtung für ein gasförmiges Medium, insbesondere Luft, umfassend mindestens eine Brennstoffzellenvorrichtung (10) nach einem der Ansprüche 1 bis 11, eine Kammer (82), in der die mindestens einen Brennstoffzellenvorrichtung (10) angeordnet ist, eine Eintrittsöffnung (831) der Kammer (82) für das gasförmige Medium, eine AustrittsÖffnung (832) der Kammer (82) für das gasförmige Medium, eine Sammeleinrichtung (94) mit einem Pump- oder Saugaggregat (92), um Wasser enthaltendes Abgas der mindestens einen Brennstoffzellenvorrichtung (10) aus der Kammer (82) zu entfernen und dem Abgas der mindestens einen Brennstoffzellenvorrichtung (10) Wasser zu entziehen, und eine Zuführleitung (100), mit der dem Abgas entzogenes Wasser der Kammer (82) strömungsaufwärts der mindestens einen Brennstoffzellenvorrichtung (10) zuführbar ist.

14. Konditionierungsvorrichtung nach Anspruch 13, **dadurch gekennzeichnet, dass** die Konditionierungsvorrichtung (80) zumindest eines der Folgenden umfasst:
- eine Kühleinrichtung (106), der über eine Zuführleitung (118) das zu konditionierende Medium zuführbar ist, wobei die Kühleinrichtung (108) einen Teil der Sammeleinrichtung (94) ausbildet, indem das Wasser enthaltende Abgas der Kühleinrichtung (108) zugeführt und darin kondensiert und der Kammer (82) zugeführt wird;
- eine mittels Energie der mindestens einen Brennstoffzellenvorrichtung (10) elektrisch betriebene Heizeinrichtung (108), der das zu konditionierende gasförmige Medium zuführbar ist.

## Claims

1. Fuel cell device comprising a plurality of fuel cells (12), in particular PEM fuel cells, arranged one above the other in a stacking direction (14) and forming a fuel cell stack (18), a recess (24) that passes through the fuel cells (12) in the stacking direction (14) being formed in the fuel cell stack (18), and at least one heat conducting element (34) being arranged in the recess (24), **characterized in that** the at least one heat conducting element (34) is in thermal contact with the fuel cells (12), the at least one heat conducting element (34) being in indirect heat contact with the fuel cell stack (18) via a thermally conductive contact medium (44), the contact medium (44) preferably being formed as a film.

2. Fuel cell device in accordance with claim 1, **characterized in that** the recess (24) is a through-opening (26) from a first end side (20) of the fuel cell stack (18) to a second end side (22) of the fuel cell stack (18), in particular **in that** the fuel cell stack (18) forms a hollow cylinder.

3. Fuel cell device in accordance with claim 1 or claim 2, **characterized in that** the at least one heat conducting element (34) extends along the entire or substantially entire recess (24), in particular from the first end side (20) to the second end side (22) of the fuel cell stack (18).

4. Fuel cell device in accordance with any one of the preceding claims, **characterized in that** the at least one heat conducting element (34) is arranged on an inner peripheral surface (32) of the fuel cell stack (18), which encloses the recess (24).

5. Fuel cell device in accordance with any one of the preceding claims, **characterized in that** at least one of the following applies:
- the heat conducting element (34) is a convectively cooled heat conducting element (34);
- the heat conducting element (34) is configured as a heat pipe (36).

6. Fuel cell device in accordance with any one of the preceding claims, **characterized in that** the recess (24) has an extension that is transverse and in particular perpendicular to planes each defined by the fuel cells (12).

7. Fuel cell device in accordance with any one of the preceding claims, **characterized in that** the fuel cell device (10) has, on an outer lateral surface (16) of the fuel cell stack (18), at least one heat conducting element (34) in thermal contact with the fuel cells (12).

8. Fuel cell device in accordance with any one of the preceding claims, **characterized in that** the at least one heat conducting element (34) is aligned in parallel with the stacking direction (14) and/or **in that** the fuel cells (12) have an octagonal outer contour (48) in plan view in the stacking direction (14).

9. Fuel cell device in accordance with any one of the preceding claims, **characterized in that** a plurality of heat conducting elements (34) is arranged in the recess (24) and/or a plurality of heat conducting elements (34) is arranged on an outer lateral surface (16) of the fuel cell stack (18), in particular **in that** the heat conducting elements (34) are identically configured, preferably **in that** the heat conducting elements (34) are arranged equidistantly in the peripheral direction of the fuel cell stack (18) on an inner peripheral surface (32) enclosing the recess (24) and/or on the outer lateral surface (16).

10. Fuel cell device in accordance with any one of the preceding claims, **characterized in that** the recess (24) and/or a lateral surface (16) of the fuel cell stack (18), extending in the stacking direction (14), in the fuel cells (12) comprises at least one groove (38) into which the at least one heat conducting element (34) engages partially and preferably with a positive-locking, the at least one heat conducting element (34) preferably engaging approximately halfway into the groove (38).

11. Fuel cell device in accordance with any one of the preceding claims, **characterized in that** the recess (24) has, in plan view in the stacking direction (14), a contour (50) corresponding to the contour (48) of the fuel cells (12) and is in particular congruent with the latter.

12. Vehicle, in particular an aircraft (52; 60), comprising at least one fuel cell device (10) in accordance with any one of the preceding claims and an interior (55; 63) which is delimited by a wall (56; 64) and in which the at least one fuel cell device (10) is arranged, wherein the wall (56; 64) has at least one inlet opening (57; 65) for cooling air and cooling air entering the interior (55; 63) cools the at least one fuel cell device (10) by convection.

13. Conditioning device for a gaseous medium, in particular air, comprising at least one fuel cell device (10) in accordance with any one of claims 1 to 11, a chamber (82) in which the at least one fuel cell device (10) is arranged, an inlet opening (831) of the chamber (82) for the gaseous medium, an outlet opening (832) of the chamber (82) for the gaseous medium, a collecting means (94) having a pump or suction unit (92) to remove water-containing exhaust gas of the at least one fuel cell device (10) from the chamber (82), and to extract water from the exhaust gas of the at least one fuel cell device (10), and a feed conduit (100) with which water extracted from the exhaust gas is feedable to the chamber (82) upstream of the at least one fuel cell device (10).

14. Conditioning device in accordance with claim 13, **characterized in that** the conditioning device (80) comprises at least one of the following:
- a cooling means (106) which is feedable with the medium to be conditioned via a feed conduit (118), the cooling means (108) forming a portion of the collecting means (94) by the water-containing exhaust gas being fed to the cooling means (108) and condensed therein and fed to the chamber (82);
- a heating means (108) which is electrically operated by means of energy of the at least one fuel cell device (10) and is feedable to the gaseous medium to be conditioned.

## Revendications

1. Dispositif de pile à combustible, comprenant une pluralité de piles à combustible (12), en particulier des piles à combustible PEM, disposées les unes au-dessus des autres dans une direction d'empilement (14) et formant un empilement de piles à combustible (18), un évidement (24), traversant les piles à combustible (12) dans la direction d'empilement (14) étant formé dans l'empilement de piles à combustible (18) et au moins un élément conducteur de chaleur (34) étant disposé dans l'évidement (24), **caractérisé en ce qu'**au moins un élément conducteur de chaleur (34) est en contact thermique avec les piles à combustible (12), l'au moins un élément conducteur de chaleur (34) étant indirectement en contact thermique avec l'empilement de piles à combustible (18) par l'intermédiaire d'un milieu de contact (44) thermiquement conducteur, le milieu de contact (44) étant de préférence formé en couche.

2. Dispositif de pile à combustible selon la revendication 1, **caractérisé en ce que** l'évidement (24) est une ouverture de passage (26) depuis un premier côté d'extrémité (20) de l'empilement de piles à combustible (18) jusqu'à un deuxième côté d'extrémité (22) de l'empilement de piles à combustible (18), en particulier **en ce que** l'empilement de piles à combustible (18) forme un cylindre creux.

3. Dispositif de pile à combustible selon la revendication 1 ou 2, **caractérisé en ce que** l'au moins un élément conducteur de chaleur (34) s'étend le long de la totalité ou de la quasi-totalité de l'évidement (24), en particulier depuis le premier côté d'extrémité (20) jusqu'au deuxième côté d'extrémité (22) de l'empilement de piles à combustible (18).

4. Dispositif de pile à combustible selon l'une des revendications précédentes, **caractérisé en ce que** l'au moins un élément conducteur de chaleur (34) est disposé sur une surface périphérique intérieure (32) de l'empilement de piles à combustible (18) qui entoure l'évidement (24).

5. Dispositif de pile à combustible selon l'une des revendications précédentes, **caractérisé en ce qu'**au moins l'un des éléments suivants s'applique :
- l'élément conducteur de chaleur (34) est un élément conducteur de chaleur (34) refroidi par convection ;
- l'élément conducteur de chaleur (34) est conçu comme un caloduc (36) (heatpipe).

6. Dispositif de pile à combustible selon l'une des revendications précédentes, **caractérisé en ce que** l'évidement (24) présente une extension transversale et notamment perpendiculaire à des plans définis respectivement par les piles à combustible (12).

7. Dispositif de pile à combustible selon l'une des revendications précédentes, **caractérisé en ce que** le dispositif de pile à combustible (10) présente sur une surface d'enveloppe (16) extérieure de l'empilement de piles à combustible (18) au moins un élément conducteur de chaleur (34) en contact thermique avec les piles à combustible (12).

8. Dispositif de pile à combustible selon l'une des revendications précédentes, **caractérisé en ce que** l'au moins un élément conducteur de chaleur (34) est orienté parallèlement à la direction d'empilement (14) et/ou **en ce que** les piles à combustible (12) présentent, en vue de dessus dans la direction d'empilement (14), un contour extérieur octogonal (48).

9. Dispositif de pile à combustible selon l'une des revendications précédentes, **caractérisé en ce qu'**une pluralité d'éléments conducteurs de chaleur (34) est disposée dans l'évidement (24) et/ou une pluralité d'éléments conducteurs de chaleur (34) est disposée sur une surface d'enveloppe (16) extérieure de l'empilement de piles à combustible (18), en particulier **en ce que** les éléments conducteurs de chaleur (34) sont réalisés de manière identique, de préférence **en ce que** les éléments conducteurs de chaleur (34) sont disposés de manière équidistante dans la direction périphérique de l'empilement de piles à combustible (18) sur une surface périphérique intérieure (32) entourant l'évidement (24) et/ou sur la surface d'enveloppe (16) extérieure.

10. Dispositif de pile à combustible selon l'une des revendications précédentes, **caractérisé en ce que** l'évidement (24) et/ou une surface d'enveloppe (16) de l'empilement de piles à combustible (18) dans les piles à combustible (12) comprend, en s'étendant dans la direction d'empilement (14), au moins une rainure (38) dans laquelle l'au moins un élément conducteur de chaleur (34) s'engage partiellement et de préférence par complémentarité de forme, l'au moins un élément conducteur de chaleur (34) s'engageant de préférence à peu près à moitié dans la rainure (38).

11. Dispositif de pile à combustible selon l'une des revendications précédentes, **caractérisé en ce que** l'évidement (24) présente, en vue de dessus dans la direction d'empilement (14), un contour (50) coïncidant avec le contour (48) des piles à combustible (12) et en particulier congruent à celui-ci.

12. Véhicule, en particulier aéronef (52 ; 60), comprenant au moins un dispositif de pile à combustible (10) selon l'une des revendications précédentes et un espace intérieur (55 ; 63) délimité par une paroi (56 ; 64), dans lequel est disposé l'au moins un dispositif de pile à combustible (10), la paroi (56 ; 64) présentant au moins une ouverture d'entrée (57 ; 65) pour l'air de refroidissement et l'air de refroidissement entrant dans l'espace intérieur (55 ; 63) refroidissant l'au moins un dispositif de pile à combustible (10) par convection.

13. Dispositif de conditionnement d'un milieu gazeux, notamment de l'air, comprenant au moins un dispositif de pile à combustible (10) selon l'une des revendications 1 à 11, une chambre (82) dans laquelle est disposé l'au moins un dispositif de pile à combustible (10), une ouverture d'entrée (831) de la chambre (82) pour le milieu gazeux, une ouverture de sortie (832) de la chambre (82) pour le milieu gazeux, un dispositif de collecte (94) avec un groupe de pompage ou d'aspiration (92), pour éliminer de la chambre (82) le gaz d'échappement contenant de l'eau de l'au moins un dispositif de pile à combustible (10) et pour extraire de l'eau du gaz d'échappement de l'au moins un dispositif de pile à combustible (10), et une conduite d'alimentation (100), avec laquelle l'eau extraite du gaz d'échappement peut être amenée à la chambre (82) en amont de l'au moins un dispositif de pile à combustible (10).

14. Dispositif de conditionnement selon la revendication 13, **caractérisé en ce que** le dispositif de conditionnement (80) comprend au moins l'un des éléments suivants :
- un dispositif de refroidissement (106) auquel le milieu à conditionner peut être amené par une conduite d'alimentation (118), le dispositif de refroidissement (108) formant une partie du dispositif de collecte (94), **en ce que** le gaz d'échappement contenant de l'eau est amené au dispositif de refroidissement (108) et y est condensé et amené à la chambre (82) ;
- un dispositif de chauffage (108) actionné électriquement au moyen de l'énergie de l'au moins un dispositif de pile à combustible (10), auquel le milieu gazeux à conditionner peut être amené.
